# EUROPEAN PATENT SPECIFICATION

(11) **EP 1 752 367 B1**
(45) Date of publication and mention of the grant of the patent: **19.10.2011**
(21) Application number: 06016631.1
(22) Date of filing: 09.08.2006
(51) Int. Cl.: B62J 17/04

(54) **Motorcycle**
Motorrad
Motocyclette

(30) Priority: 09.08.2005 JP 2005230493
(43) Date of publication of application: 14.02.2007
(73) Proprietor: Yamaha Hatsudoki Kabushiki Kaisha, Shizuoka-ken 438-8501 (JP)
(72) Inventor: Suzuki, Mitsugu, Iwata-shi Shizuoka-ken 438-8501 (JP)
(74) Representative: Grünecker, Kinkeldey, Stockmair & Schwanhäusser

(56) References cited:
- EP-A- 1 291 274
- DE-A1- 3 941 875
- DE-A1- 10 065 131
- JP-A- 2000 159 173
- JP-A- 2001 106 144

## Description

The present invention relates to a motorcycle having a windscreen position adjusting means.

The closest prior art is represented by document JP2001106144 which describes a motorcycle comprising a windscreen position adjusting means, having a windscreen, a first supporting means defining a first movement path extending to be inclined rearward and upward, the first supporting means pivotally supporting the windscreen and can move the windscreen along the first movement path, the first supporting means includes a guide rail and a slider supported on the guide rail to be moveable and pivotally coupled to the windscreen, a second supporting means defining a second movement path with an inclination angle to the horizontal larger than that of the first movement path, the second supporting means supporting the windscreen at a position spaced from a position where the first supporting means supports the windscreen and for moving the windscreen along the second movement path, the second supporting means includes a pair of left and right support parts located in the vehicle width direction, wherein the pair of left and right support parts each include a guide rail and a slider supported on the guide rail to be moveable, wherein the first supporting means is disposed between the pair of left and right support parts of the second supporting means in the vehicle width direction.

Some conventional motorcycles have a windscreen position adjusting means as disclosed in JP-A-2000-177668, for example, so that the vertical position and the angle of a windscreen can be changed according to traveling speed and rider's physique. In such motorcycles, the position adjusting means is used to relatively lower the position of the windscreen and locate the windscreen to be inclined to have a relatively small angle to the horizontal. This can lower air resistance during traveling at high speeds. The position adjusting means can also be used to relatively raise the vertical position of the windscreen and relatively increase the angle of the windscreen to the horizontal, thereby blocking a traveling wind that acts on the rider.

The afore-indicated position adjusting means is designed such that the front portion and the rear portion of the windscreen are respectively supported on guide rails to be movable. The guide rails are defined by a pair of left and right first guide rails for supporting the front portion of the windscreen, and a pair of left and right second guide rails for supporting the rear portion of the windscreen.

The guide rails are provided on the vehicle body to be inclined rearward and upward, and support first and second sliders to be moveable. The first sliders supported on the first guide rails are pivotally coupled to the front portion of the windscreen. The second sliders supported on the second guide rails are pivotally coupled to the rear portion of the windscreen.

Of the first and second guide rails, the second guide rails for supporting the rear portion of the windscreen are disposed to have a large angle to the horizontal relative to the first guide rails.

In this windscreen position adjusting means, movement of the windscreen is achieved as an actuator moves the sliders supported on the guide rails.

In the conventional windscreen position adjusting means constructed as above, the windscreen is actuated by the electrically-powered actuator so as to move along the first and second guide rails, thereby changing the vertical position of the windscreen and the angle thereof to the horizontal. More specifically, the windscreen is changed in vertical position and angle between a first position that is relatively low and has a relatively small angle to the horizontal and a second position that is relatively high and has a relatively large angle to the horizontal.

In the conventional windscreen position adjusting means described above, the windscreen is respectively supported on the guide rails, at its four positions in total, namely, opposite ends of the front portion and the rear portion in the vertical width direction. Therefore, to actuate the windscreen in this windscreen position adjusting means, the sliders on opposite sides in the vehicle width direction must be connected to the actuator, causing a problem of an increase in size of the unit.

The windscreen position adjusting means disclosed in JP-A-2000-159173 possesses a front side supporting mechanism and a rear side supporting mechanism and allows the movement of the windscreen to have a wide range without any significant increase to the rear side supporting mechanism, wherein an actuator for driving the adjusting means is connected to one of both supporting mechanisms.

Patent Document DE 39 41 875 discloses a windscreen position adjusting means which utilizes a specially constructed lever arm fixedly attached to the windscreen and rotatably attached to two sliders which travel along respective guide rails, wherein the rail guiding the upper slider is steeper than the rail guiding the lower slider and the degree of slope is adjustable using a set screw.

The present invention aims to overcome such drawbacks.

It is an objective of the present invention to provided a motorcycle comprsing a windscreen position adjusting means assuring an increased manufacturing cost efficiency while increasing the flexibility of position adjusting of the windscreen.

Such an objective is achieved by a motorcycle according to claim 1.

Preferred embodiments of the present invention, as set forth in the appended claims, comprise:
- an actuator for actuating the windscreen; and a moving member of the first supporting means connected to the actuator to move together with the windscreen,
- said actuator is preferably disposed in a generally central portion in the vehicle width direction,
- an actuator is preferably connected to the coupling member between the pair of support parts located in the vehicle width direction of the first supporting means,
- said guide rail is formed preferably in a U-shaped cross section that is open upward, and is preferably disposed below the coupling member,
- said coupling member is preferably shaped like a plate extending in the vehicle width direction, and is preferably inclined parallel to the direction in which the guide rail extends to be inclined, as seen in a transverse direction,
- said guide rail of the first supporting means and the guide rail of the second supporting means are preferably disposed in overlapping relation to each other as seen in a transverse direction,
- the guide rails of the second supporting means preferably are formed in U-shaped cross sections that are open to the inside in the vehicle width direction, and are preferably disposed outside of the left-side coupling member and the right-side coupling member in the vehicle width direction.
- the windscreen preferably includes a screen body made of a transparent resin material, and a screen frame for supporting the front end of the screen body, in which the screen frame preferably extends from one end of the screen body to the other end in the vehicle width direction, and in which the left-side coupling member and the right-side coupling member are preferably connected to the ends of the screen frame in the vehicle width direction.

According to the present invention, a first supporting means for changing the vertical position of a windscreen, and a second supporting means for changing the angle of the windscreen are disposed side by side in a vehicle width direction, effecting a size reduction of the windscreen position adjusting means. A replacement of a left-side coupling member and a right-side coupling member with those of a different length allows a change in the vertical position and the angle of the windscreen without moving the sliders. This invention can therefore provide increased flexibility of vertical position and angle determination of the windscreen, permitting a slight adjustment according to rider's physique. In addition, the pair of left and right support parts can be moved together.

The first supporting means and a moving member actuated by an actuator can be located in a generally central portion in the vehicle width direction. This invention therefore enables provision of the first supporting means and the moving member in a more compact manner, effecting a further size reduction of the windscreen position adjusting means.

According to the invention of Claim 3, the actuator is located in the generally central portion in the vehicle width direction, enabling the provision of the actuator in a more compact manner and effecting a further size reduction of the windscreen position adjusting means.

According to the invention of Claim 4, a pair of left and right support parts of the first supporting means and the actuator can be provided in a more compact manner, effecting a further size reduction of the windscreen position adjusting means.

According to the invention of Claim 5, the power of the actuator can be equally distributed between the pair of sliders. This invention therefore permits smooth operation of the windscreen.

According to the invention of Claim 6, the position of the guide rail in the vehicle width direction is not limited by the coupling member. This invention therefore allows disposition of the actuator between the pair of left and right support parts without extending the transverse distance therebetween.

According to the invention of Claim 7, the coupling member dose not project from the guide rail upward. This invention therefore allows disposition of the front end portion of a vehicle body in a more compact manner in a vertical direction.

According to the invention of Claim 8, the guide rail of the first supporting means and the guide rail of the second supporting means can be arranged in a more compact manner in the vertical direction. This invention therefore effects a vertical size reduction of the unit.

According to the invention of Claim 9, the guide rails of the second supporting means and the left-side coupling member and right-side coupling member can be disposed in overlapping relation to each other as seen in a transverse direction of the vehicle body. This invention therefore effects a vertical size reduction of the unit.

According to the invention of Claim 10, the screen body can be supported on the strong frame.

According to the invention of Claim 11, a motorcycle capable of effecting a size reduction of a front cowling for coving the area close to the lower portion of the windscreen can be provided.

In the following, the present invention is explained in greater detail with respect to several embodiments thereof in conjunction with the accompanying drawings, wherein:
- FIG. 1: is a side view of a motorcycle having a windscreen position adjusting means according to the present invention,
- FiG. 2: is the front view of the windscreen position adjusting means ,
- FIG. 3: is a side view illustrating a change in the vertical position and the angle of a windscreen.
- FIG. 4: is an enlarged sectional view illustrating a connection part of a second guide rail and a second slider,
- FIG. 5: is a perspective view illustrating the general construction of the windscreen position adjusting means for a motorcycle according to the present invention.
- FIG. 6: is an enlarged perspective view illustrating a portion of FIG. 5, and
- FIG. 7: is a perspective view illustrating connection parts of first and second coupling arms and a windscreen frame.

Description of Reference Numerals and Symbols:
2: windscreen position adjusting means 15: windscreen
16: screen body 17: screen frame 21: first supporting means
22: second supporting means 23: first guide rail 24: first slider
25: second guide rail 26: second slider 27: coupling member
29: actuator 31L,31R: first arm 32L,32R:.coupling link
33: first support shaft 41L,41R: second arm
42: second support shaft

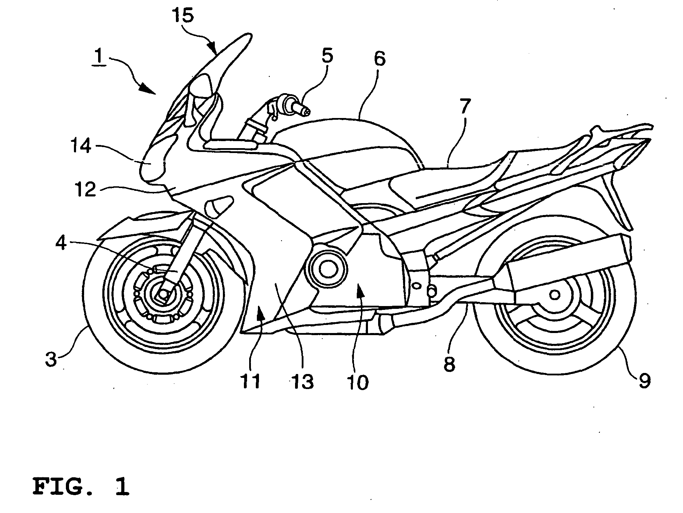

Description will be hereinafter made in detail of an embodiment of the windscreen position adjusting means for a motorcycle according to the present invention with reference to FIGs. 1 through 7.

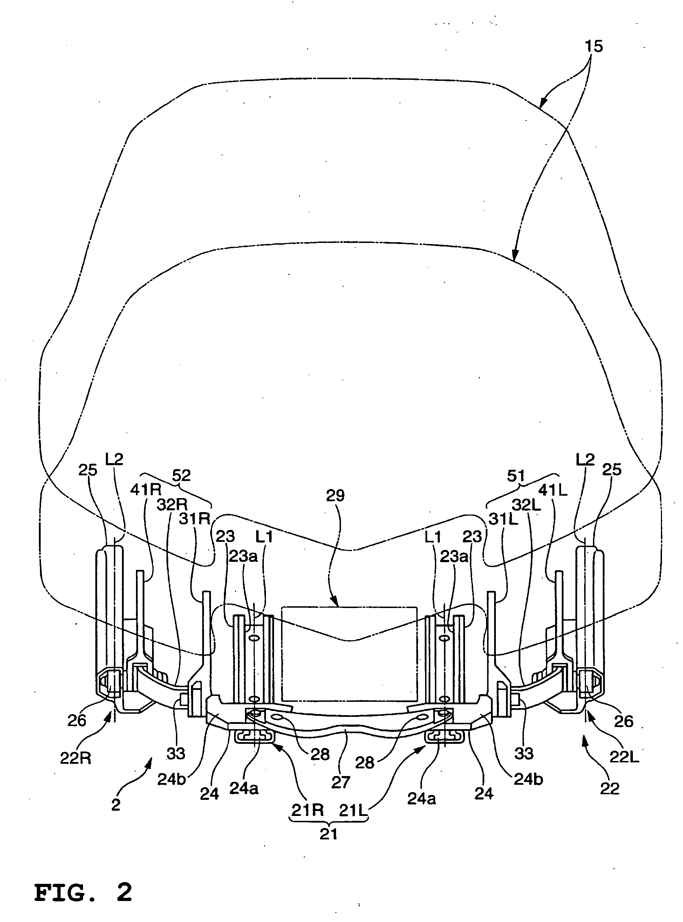

In the drawings, reference numeral 1 denotes a motorcycle having a windscreen position adjusting means 2 (see FIG. 2) according to this embodiment. In FIG. 1, reference numeral 3 denotes a front wheel, 4 a front fork, 5 steering handlebars, 6 a fuel tank, 7 a seat, 8 a rear arm, 9 a rear wheel, 10 an engine, and 11a cowling.

The cowling 11 includes a front cowling 12 for covering the front portion of the steering handlebars 5, and side cowlings 13 extending downward from opposite sides of the front cowling 12.

The front cowling 12 is shaped so as to cover the periphery of a headlight 14, and attached to a cowling frame (not shown) to be supported on a body frame via the cowling frame.

At a position of the front cowling 12 close to its upper end, a windscreen 15 supported on the windscreen position adjusting means 2 is provided.

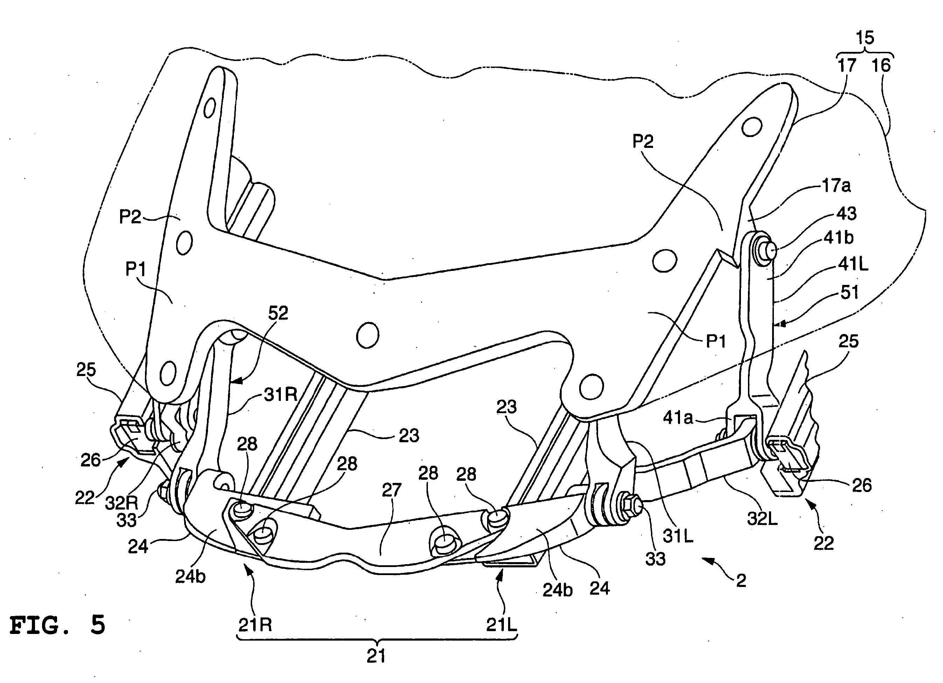

As shown in FIG. 5, the windscreen 15 includes a screen body 16 made of a transparent resin material, and a screen frame 17 for supporting the lower end of the screen body 16.

As shown in FIGs. 2 and 5, the windscreen position adjusting means 2 includes a first supporting means 21 located relatively on the inside in a vehicle width direction, and a second supporting means 22 disposed on both sides of the first supporting means 21.

The first supporting means 21 includes a support part 21L located on the left side of a vehicle body, and a support part 21R located on the right side of the vehicle body. The paired support part 21L and support part 21R located in the vehicle width direction respectively have a pair of left and right fist guide rails 23 extending to be inclined rearward and upward, and a pair of left and right first sliders 24 supported on the first guide rails 23 to be moveable. The first slider 24 defines a moving member of the first supporting means 21 to move together with the windscreen 15.

The second supporting means 22 includes a support part 22L located on the left side of the vehicle body, and a support part 22R located on the right side of the vehicle body. The paired support part 22L and support part 22R located in the vehicle width direction each have a second guide rail 25 extending to be inclined rearward and upward so as to have an angle to the horizontal larger than that of the first guide rail 23, and a second slider 26 supported on the second guide rail 25 to be moveable.

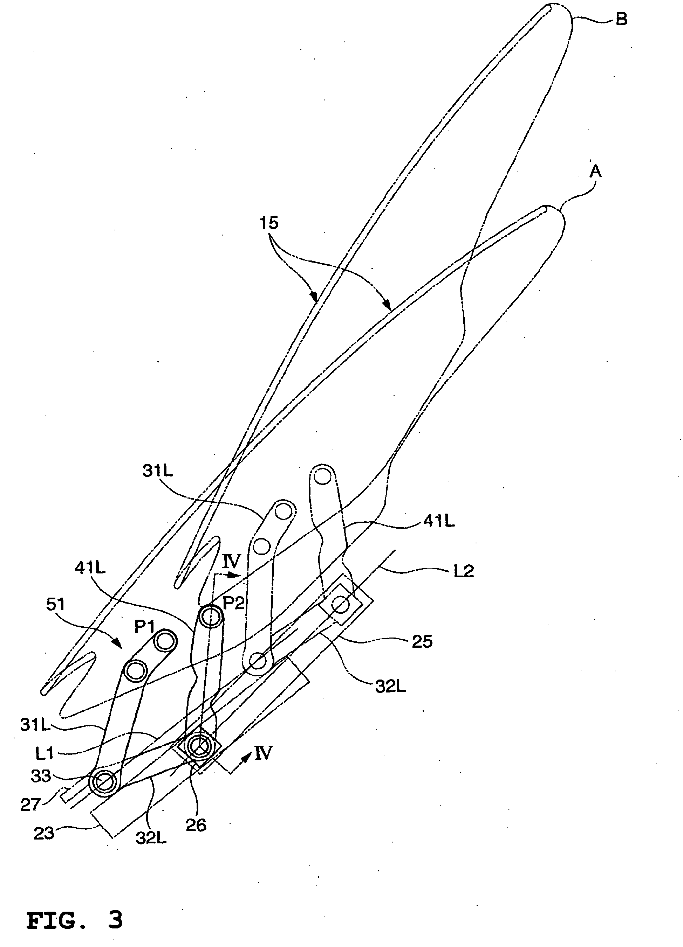

As shown in FIG. 2, the first guide rail 23 has a U-shaped cross section that is open upward, and is formed to extend vertically as seen from the front side of the vehicle body, that is, to be inclined rearward and upward. The first guide rail 23 is supported on the cowling frame (not shown). More specifically, a movement path defined by the first guide rail 23 along which the first slider 24 moves (movement path of the first supporting means 21) extends to be inclined rearward and upward as indicated by the alternate long and short dashed line L1 in FIG. 3.

As shown in FIG. 2, the first slider 24 includes a lower portion 24a having a sliding member (not shown) attached thereto that is fitted within the space defined by the first guide rail 23, and an upper portion 24b projecting upward through a top opening 23a of the first guide rail 23. The upper portion 24b of the first slider 24 is located above the first guide rail 23 and extends to the outside in the vehicle width direction. The upper portion 24b is attached to a coupling member 27, which will be described below, through which the upper portion is connected to the upper portion 24b of the other first slider 24.

The coupling member 27 is shaped like a plate extending in the vehicle width direction, and attached on top of the left and right first sliders 24 with attaching bolts 28. The coupling member 27 thus moves above the first guide rails 23. As shown in FIG. 3, the coupling member 27 is attached to the fist slider 24 while being inclined parallel to the direction in which the guide rail 23 extends to be inclined, as seen in a transverse direction.

The coupling member 27 has the central portion in the vehicle width direction that is connected to an actuator 29 (see FIG. 2) for actuating the windscreen 15. The actuator 29 is designed to move the coupling member 27 parallel to the first guide rails 23. Different examples of mechanisms that can be used to embody the actuator 29, such as that one described in the art referenced to above, in which the power of a motor causes reciprocating movement of wires, or such one in which a gear or cam is used to convert the rotation of the motor to reciprocating movement, which is transmitted to the coupling member 27.

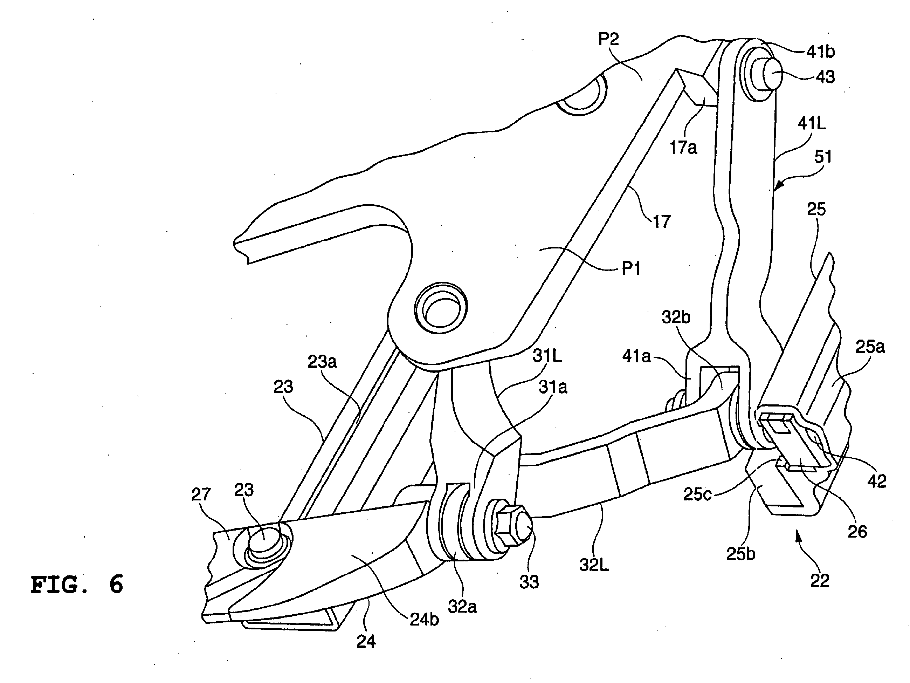

As shown in FIGs. 5 and 6, the upper portion 24b of the first slider 24 has the outer end in the vehicle width direction to which the screen frame 17 is coupled via a first arm 31L, 31R extending substantially vertically. The first slider 24 on the left side of the vehicle body is connected to the left end of the screen frame 17 with respect to the vehicle body via the first arm 31L, and the first slider 24 on the right side of the vehicle body is connected to the right end of the screen frame 17 with respect to the vehicle body via the first arm 31R.

As shown in FIG. 6, the lower end 31a of the first arm 31L, 31R is formed in a U shape that is open downward, and is pivotally attached to the first slider 24 with a first support shaft 33, with the front end 32a of a coupling link 32L, 32R to be discussed below being interposed.

The first support shaft 33 is attached to the first slider 24 so as to extend through the first arm 31L, 31R and the coupling link 32L, 32R in the vehicle width direction, and pivotally supports the first arm 31L, 31R and the coupling link 32L, 32R about its axis extending in the vehicle width direction. The coupling links 32L, 32R serve to connect the second sliders 26 of the second guide rails 25, which will be described below, to the pair of left and right first sliders 24.

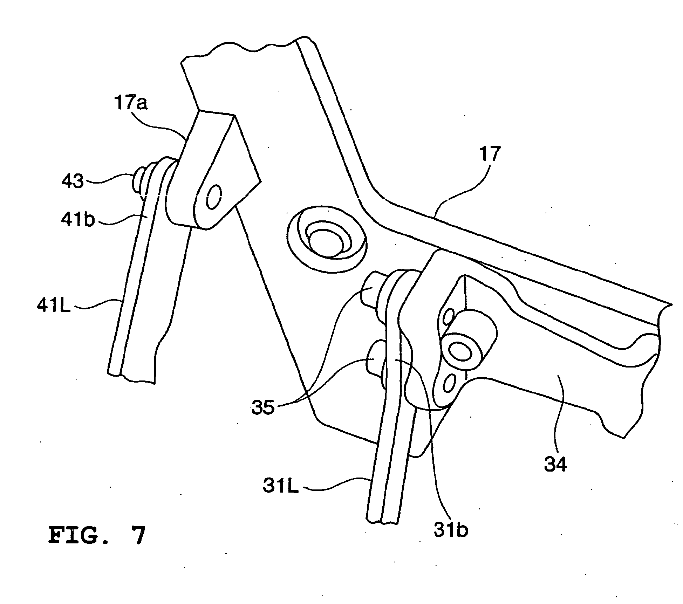

As shown in FIG. 7, the upper end 31b of the first arm 31L, 31R is attached to a support plate 34 fixed to the rear face of the screen frame 17, with two securing bolts 35. A part where the upper end 31b of the first arm 31L, 31R is attached to the screen frame 17 is hereinafter referred to as position P1. The first guide rail 23 on the left side of the vehicle body, the first slider 24 provided on this first guide rail 23, and the first arm 31L on the left side of the vehicle body define the support part 21L on the left side of the vehicle body of the first supporting means 21. The first guide rail 23 on the right side of the vehicle body, the first slider 24 provided on this first guide rail 23, and the first arm 31R on the right side of the vehicle body define the support part 21R on the right side of the vehicle body of the first supporting means 21.

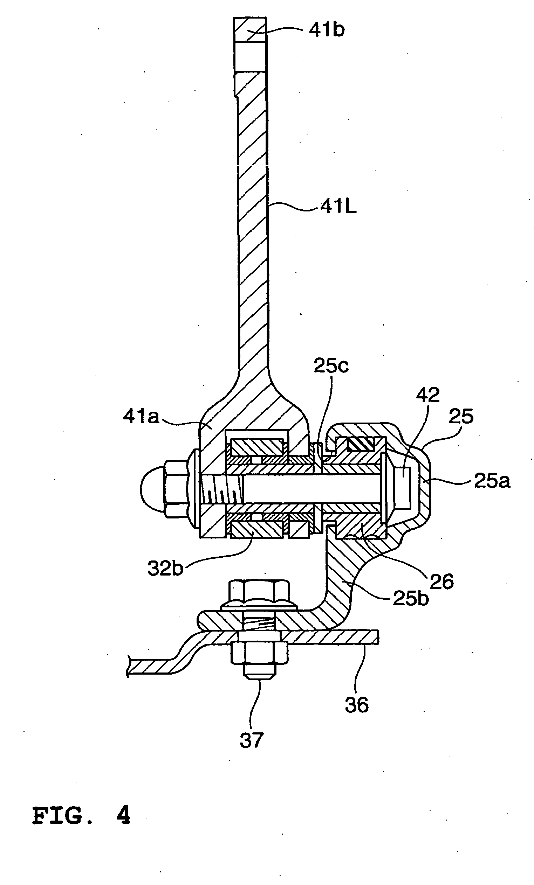

As shown in FIGs. 4 and 6, the second guide rail 25 includes a guide rail body 25a formed in a U-shaped cross section that is open to the inside in the vehicle width direction (to the left-hand side in FIGs. 4 and 6), and an attachment portion 25b extending downward from the lower end of the guide rail body 25a and having an L-shaped cross section. As shown in FIG. 4, the attachment portion 25b is secured to a rail supporting plate 36 with a securing bolt 37. The rail supporting plate 36 is supported on the cowling frame (not shown).

The second guide rail 25 is formed to be inclined rearward and upward, and thus a movement path (second movement path) along which the second slider 26 moves extends to be inclined rearward and upward as indicated by the alternate long and short dashed line L2 in FIG. 3. The movement path L2 is defined so as to have an angle to the horizontal larger than that of the movement path L1 defined by the first guide rail 23.

As shown in FIG. 4, the second slider 26 is shaped so as to fit within the space defined by the guide rail body 25a. The inner end of the second slider 26 in the vehicle width direction projects outside of the second guide rail 25 through an opening 25c of the second guide rail 25 on the inside in the vehicle width direction. As shown in FIGs. 5 and 6, the inner end of the second slider 26 is coupled to the screen frame 17 via a second arm 41L, 41R extending substantially vertically.

As shown in FIG. 4, the lower end 41a of the second arm 41L, 41R is in a U shape that is open downward, and is pivotally attached to the second slider 26 with a second support shaft 42 with the rear end 32b of the coupling link 32L, 32R being interposed. The second support shaft 42 extends through the second slider 26, the second arm 41L, 41R, and the coupling link 32L, 32R in the vehicle width direction, and pivotally supports the second arm 41L, 41R and the coupling link 32L, 32R about its axis extending in the vehicle width direction.

As shown in FIGs. 5 through 7, the upper end 41b of the second arm 41L, 41R is secured to an attachment part 17a of the screen frame 17 with a securing bolt 43. The attachment part 17a is disposed at position P2 that is located rearward of the position P1 with respect to the vehicle body, as shown in FIG. 5. In other words, the second arm 41L, 41R supports the windscreen 15 at the position P2 rearward of the position P1, where the first arm 31L, 31R supports the windscreen.

The lower end 41a of the second arm 41L, 41R is coupled to the lower end 31a of the first arm 31L, 31R with the coupling link 32L, 32R. The first arm 31L, 31R is rigidly secured to the screen frame 17. Ultimately, the second arm 41L, 41R is rigidly secured to the screen frame 17.

More specifically, the second arm 41L, 41R and the first arm 31L, 31R move together with the screen frame 17 while keeping a certain angle relative to the screen frame 17. The second guide rail 25, the second slider 26, the coupling link 32L, 32R, and the like define the second supporting means 22 in the present invention. The first arm 31L on the left side of the vehicle body, the second arm 41L, and the coupling link 32L define a left-side coupling member 51 in the present invention. The first arm 31R on the right side of the vehicle body, the second arm 41R, and the coupling link 32R define a right-side coupling member 52 in the present invention.

In the windscreen position adjusting means 2 constructed as above, the windscreen 15 has front end parts (front supported parts) pivotally supported on the first sliders 24 via the first arms 31L, 31R. The windscreen 15 at parts spaced apart from the front end parts in the rearward direction (rear supported parts) is pivotally supported on the second sliders 26 via the second arms 41L, 41R.

Therefore, as the first sliders 24 are moved along the first guide rails 23 together with the coupling member 27 by the actuator 29, the front supported parts of the windscreen 15 move parallel to the first guide rails 23 and the rear supported parts of the windscreen 15 move parallel to the second guide rails 25. Since the second guide rail 25 is disposed to have an angle to the horizontal larger than that of the first guide rail 23, the vertical position of the rear portion of the windscreen 15 becomes relatively higher than that of the front portion as the second slider 26 moves rearward.

In other words, according to the windscreen position adjusting means 2, as the first sliders 24 are moved along the first guide rails 23 by the actuator 29, the position of the windscreen 15 changes between a first position indicated by the chain double-dashed line A in FIG. 3 (position that is relatively low and has a relatively small angle to the horizontal) and a second position indicated by the chain double-dashed line B (position that is relatively high and has a relatively large angle to the horizontal). As shown in FIG. 3, in the windscreen position adjusting means 2 according to this embodiment, the rear edge of the windscreen 15 at the first position is at the same position in the longitudinal direction of the vehicle body as the rear edge of the windscreen 15 at the second position. Thus, in this position adjusting means 2, even when the windscreen 15 is changed in vertical position, it is possible to keep a distance from the windscreen to a rider to be substantially constant.

In the windscreen position adjusting means 2 discussed above, therefore, the first supporting means 21 for changing the vertical position of the windscreen 15, and the second supporting means 22 for changing the angle of the windscreen are disposed side by side in the vehicle width direction, effecting a size reduction.

Further, in the windscreen position adjusting means 2 according to this embodiment, the first supporting means 21 and the sliders 24 to be actuated by the actuator 29 can be located in the generally central portion in the vehicle width direction.

In the windscreen position adjusting means 2 according to this embodiment, the actuator 29 is located in the generally central portion in the vehicle width direction, enabling the provision of the actuator 29 in a more compact manner. Specifically, in the windscreen position adjusting means 2, since the actuator 29 is located between the paired left and right support parts 21L, 21R of the first supporting means 21, the support parts 21L, 21R and the actuator 29 can be provided in a more compact manner.

Specifically, in the windscreen position adjusting means 2 according to this embodiment, the actuator 29 is located between the support parts 21L, 22L on the left side of the vehicle body of the first and second supporting means 21, 22, and the support parts 21R, 22R on the right side of the vehicle body of the first and second supporting means 21, 22, enabling the provision of those members in a more compact manner.

In the windscreen position adjusting means 2 according to this embodiment, the pair of left and right sliders 24, 24 are coupled to each other with the coupling member 27, making it possible to move the sliders 24, 24 together. Further, in the windscreen position adjusting means 2 according to this embodiment, the power of the actuator 29 can be equally distributed between the paired sliders 24, 24, permitting smooth operation of the windscreen15.

In the windscreen position adjusting means 2 according to this embodiment, the guide rails 23 are disposed below the coupling member 27, so that the position of the guide rails 23 in the vehicle width direction is not limited by the coupling member 27. Besides, the coupling member 27 does not project from the guide rails 23 upward. In the windscreen position adjusting means 2, therefore, the front end portion of the vehicle body can be disposed in a more compact manner in a vertical direction.

In the windscreen position adjusting means 2 according to this embodiment, replacement of the left-side coupling member 51 and the right-side coupling member 52 with those of a different length allows a change in the vertical position and the angle of the windscreen 15 without moving the sliders 24, 26.

In the windscreen position adjusting means 2 according to this embodiment, the guide rail 23 of the first supporting means 21 and the guide rail 25 of the second supporting means 22 are disposed in overlapping relation to each other as seen in the transverse direction, enabling the arrangement of the first supporting means 21 and the second supporting means 22 in a more compact manner in the vertical direction.

In the windscreen position adjusting means 2 according to this embodiment, the guide rails 25 of the second supporting means 22 are disposed outside of the left-side coupling member 51 and the right-side coupling member 52 in the vehicle width direction. This allows the disposition of the guide rails 25 and the left-side coupling member 51 and right-side coupling member 52 in a more compact manner in overlapping relation to each other as seen in the transverse direction of the vehicle body.

In the windscreen position adjusting means 2 according to this embodiment, the screen frame 17 extends in the vehicle width direction, and opposite sides of the screen frame 17 are supported with the left-side coupling member 51 and the right-side coupling member 52. It is thus possible to support the screen body 16 on the strong frame 17.

In the windscreen position adjusting means 2 according to this embodiment, an actuation system is connected in a more compact manner and a vertical size reduction is effected as described above. The motorcycle 1 having the position adjusting means 2, therefore, can effect a size reduction of the front cowling 12 for covering the area close to the lower portion of the windscreen 15.

## Claims

1. A motorcycle, comprising a windscreen position adjusting means, having:
a windscreen (15);
a first supporting means (21) defining a first movement path extending to be inclined rearward and upward, said first supporting means (21) pivotally supporting the windscreen (15) and can move the windscreen (15) along the first movement path;
the first supporting means (21) includes a pair of left and right support parts (21L, 21R) located in a vehicle width direction, wherein the pair of left and right support parts (21L, 21R) of the first supporting means (21) each include a guide rail (23) and a slider (24) supported on the guide rail (23) to be moveable and pivotally coupled to the windscreen (15), and wherein the pair of left and right sliders (24) are coupled to each other via a coupling member (27);
a second supporting means (22) defining a second movement path with an inclination angle to the horizontal larger than that of the first movement path, said second supporting means (22) supporting the windscreen (15) at a position spaced from a position where the first supporting means (21) supports the windscreen (15) and for moving the windscreen (15) along the second movement path;
the second supporting means (22) includes a pair of left and right support parts (22L, 22R) located in the vehicle width direction, wherein the pair of left and right support parts (22L, 22R) of the second supporting means (22), each include a guide rail (25) and a slider (26) supported on the guide rail (25) to be moveable, wherein the first supporting means (21) is disposed between the pair of left and right support parts (22L, 22R) of the second supporting means (22) in the vehicle width direction;
the first supporting means (21) and the second supporting means (22) are disposed side by side in the vehicle width direction;
the sliders (24, 26) of the first and second supporting means (21, 22), on the left side of the vehicle body are coupled to each other with a left-side coupling member (51, 31L, 32L, 41L) extending downward from the left end of the windscreen (15);
the sliders (24, 26) of the first and second supporting means (21, 22), on the right side of the vehicle body are coupled to each other with a right-side coupling member (52, 31R, 32R, 41R) extending downward from the right end of the windscreen (15); and
the left-side coupling member (51, 31L, 32L, 41L) and the right-side coupling member (52, 31R, 32R, 41R) are each defined by a first arm (31L, 31R) coupling the slider (24) of the first supporting means (21) and the windscreen (15), a second arm (41L, 41R) coupling the slider (26) of the second supporting means (22) and the windscreen (15);
the left-side coupling member (51, 31L, 32L, 41L) and the right-side coupling member (52, 31R, 32R, 41R) each further comprise a coupling link (32L, 32R) coupling the slider (24) of the first supporting means (21) and the slider (26) of the second supporting means (22).

2. A motorcycle according to claim 1, wherein it further comprises an actuator (29) for actuating the windscreen, and a moving member (24) of the first supporting means (21) connected to the actuator (29) to move together with the windscreen (15).

3. A motorcycle according to claim 2, wherein the actuator (29) is disposed in a generally central portion in the vehicle width direction.

4. A motorcycle according to claim 2 or 3, wherein the actuator (29) is disposed between the pair of left and right support parts (21L, 21R) of the first supporting means (21).

5. A motorcycle according to at least one of the preceding claims 1 to 4, wherein an actuator (29) is connected to the coupling member (27) between the pair of support parts (21L, 21R) located in the vehicle width direction of the first supporting means (21).

6. A motorcycle according to at least one of the preceding claims 1 to 5, wherein the guide RAILS (23) of the first supporting means (21) are formed in a U-shaped cross section that is open upward, and is disposed below the coupling member (27).

7. A motorcycle according to at least one of the preceding claims 1 to 6, wherein the coupling member (27) is shaped like a plate extending in the vehicle width direction, and is inclined parallel to the direction in which the guide RAILS (23) of the first supporting means (21), to be inclined, as seen in a transverse direction.

8. A motorcycle according to at least one of the preceding claims 1 to 7, wherein the guide RAILS (23) of the first supporting means (21) and the guide RAILS (25) of the second supporting means (22) are disposed in overlapping relation to each other as seen in a transverse direction.

9. A motorcycle according to at least one of the preceding claims 1 to 8, wherein the guide rails (25) of the second supporting means (22) are formed in U-shaped cross sections that are open to the inside in the vehicle width direction, and are disposed outside of the left-side coupling member (51, 31L, 32L, 41L) and the right-side coupling member (52, 31R, 32R, 41R) in the vehicle width direction.

10. A motorcycle according to at least one of the preceding claims 1 to 9, wherein the windscreen (15) includes a screen body (16) made of a transparent resin material, and a screen frame (17) for supporting the front end of the screen body (16), wherein the screen frame (17) extends from one end of the screen body (16) to the other end in the vehicle width direction, and wherein the left-side coupling member (51, 31L, 32L, 41L) and the right-side coupling member (52, 31R, 32R, 41R) are connected to the ends of the screen frame (17) in the vehicle width direction.

11. A motorcycle according to at least one of the preceding claims 1 to 10, wherein the second supporting means (22) supports the windscreen (15) rearward of a position of support of the windscreen (15) by the first supporting means (21).

## Patentansprüche

1. Motorrad, aufweisend eine Windschutzscheiben- Positionseinstelleinrichtung, mit:
einer Windschutzscheibe (15);
einer ersten Trageinrichtung (21), die einen ersten Bewegungspfad bildet, der sich erstreckt, um nach hinten und nach oben geneigt zu sein, wobei die erste Trageinrichtung (21) die Windschutzscheibe (15) trägt und die Windschutzscheibe (15) entlang des Bewegungspfades bewegen kann;
wobei die erste Trageinrichtung (21) ein Paar von linken und rechten Tragteilen (21L. 21R) enthält, angeordnet in einer Richtung der Fahrzeugbreite, wobei dass Paar der linken und rechten Tragteile (21L, 21R) der ersten Trageinrichtung (21) jeweils eine Führungsschiene (23) und einen Schieber (24), gelagert auf der Führungsschiene (23), enthalten, um bewegbar und schwenkbar mit der Windschutzscheibe (15) gekuppelt zu sein, und wobei das Paar der linken und rechten Schieber (24) miteinander über ein Kupplungsteil (27) gekuppelt sind;
einer zweiten Trageinrichtung (22), die einen zweiten Bewegungspfad mit einem Neigungswinkel zu der Horizontalen, größer als der des ersten Bewegungspfades, bildet, wobei die zweite Trageinrichtung (22) die Windschutzscheibe (15) an einer Position trägt, die von einer Position in der die erste Trageinrichtung (21) die Windschutzscheibe (15) trägt, beabstandet ist und zum Bewegen der Windschutzscheibe (15) entlang des zweiten Bewegungspfades;
die zweite Trageinrichtung (22) ein Paar von linken und rechten Tragteilen (21L, 21R) enthält, angeordnet in Richtung der Fahrzeugbreite, wobei das Paar der linken und rechten Tragteile (21L, 21R) der zweiten Trageinrichtung (22) jeweils eine Führungsschiene (25) und einen Schieber (26), gelagert auf der Führungsschiene (25), enthalten, um bewegbar zu sein, wobei die erste Trageinrichtung (21) zwischen dem Paar der linken und rechten Tragteile (21L, 21R) der zweiten Trageinrichtung (22) in Richtung der Breite des Fahrzeuges angeordnet ist;
wobei die erste Trageinrichtung (21) und die zweite Trageinrichtung (22) nebeneinander in Richtung der Breite des Fahrzeuges angeordnet sind;
die Schieber (24, 26) der ersten und zweiten Trageinrichtung (21, 22) auf der linken Seite der Fahrzeugkarosserie miteinander mit einem linksseitigen Kupplungsteil (51, 31L, 32L, 41L), das sich nach unten von dem linken Ende der Windschutzscheibe (15) erstreckt, gekuppelt sind;
die Schieber (24, 26) der ersten und zweiten Trageinrichtung (21, 22) auf der rechten Seite der Fahrzeugkarosserie miteinander mit einem rechtsseitigen Kupplungsteil (52, 31R, 32R, 41R), das sich nach unten von dem rechten Ende der Windschutzscheibe (15) erstreckt, gekuppelt sind; und
das linksseitige Kupplungsteil (51, 31L, 32L, 41L) und das rechtsseitige Kupplungsteil (52, 31R, 32R, 41R), jeweils gebildet durch einen ersten Arm (31L, 31R), der den Schieber (24) der ersten Trageinrichtung (21) und die Windschutzscheibe (15) kuppelt, einen zweiten Arm (41L, 41R), der den Schieber (24) der zweiten Trageinrichtung (22) und die Windschutzscheibe (15) kuppelt;
das linksseitige Kupplungsteil (51, 31L, 32L, 41L) und das rechtsseitige Kupplungsteil (52, 31R, 32R, 41R) jeweils außerdem eine Kupplungsverbindung (32L, 32R) aufweisen, die den Schieber (24) der ersten Trageinrichtung (21) und den Schieber (26) der zweiten Trageinrichtung (22) kuppelt.

2. Motorrad nach Anspruch 1, wobei es außerdem aufweist einen Betätiger (29) zum Betätigen der Windschutzscheibe und ein Bewegungsteil (24) der ersten Trageinrichtung (21) und ein Bewegungsteil (24) der ersten Trageinrichtung (21), verbunden mit dem Betätiger (29), um sich gemeinsam mit der Windschutzscheibe (15) zu bewegen.

3. Motorrad nach Anspruch 2, wobei der Betätiger (29) in einer im Wesentlichen zentralen Position in Richtung der Fahrzeugbreite angeordnet ist.

4. Motorrad nach Anspruch 2 oder 3, wobei der Betätiger (29) zwischen dem Paar der linken und rechten Tragteile (21L, 21R) der ersten Trageinrichtung (21) angeordnet ist.

5. Motorrad nach zumindest einem der vorhergehenden Ansprüche 1 bis 4, wobei der Betätiger (29) mit dem Kupplungsteil (27) zwischen dem Paar der Tragteile (21L, 21R), angeordnet in Richtung der Fahrzeugbreite der ersten Trageinrichtung (21), verbunden ist.

6. Motorrad nach zumindest einem der vorhergehenden Ansprüche 1 bis 5, wobei die Führungsschienen (23) der ersten Trageinrichtung (21) in einem U- förmigen Querschnitt gebildet sind, der nach oben offen ist und unter dem Kupplungsteil (27) angeordnet ist.

7. Motorrad nach zumindest einem der vorhergehenden Ansprüche 1 bis 6, wobei das Kupplungsteil (27) wie eine Platte geformt ist, die sich in Richtung der Fahrzeugbreite erstreckt und parallel zu der Richtung geneigt ist, in der die Führungsschienen (23) der ersten Trageinrichtung (21) sich erstrecken, um geneigt zu sein, wenn in einer Querrichtung gesehen.

8. Motorrad nach zumindest einem der vorhergehenden Ansprüche 1 bis 7, wobei die Führungsschienen (23) der ersten Trageinrichtung (21) und die Führungsschienen (25) der zweiten Trageinrichtung (22) in überlappender Beziehung zueinander angeordnet sind, wenn in Querrichtung gesehen.

9. Motorrad nach zumindest einem der vorhergehenden Ansprüche 1 bis 8, wobei die Führungsschienen (25) der zweiten Trageinrichtung (22) in U- förmigen Querschnitten gebildet sind, die nach innen in Richtung der Fahrzeugbreite offen sind, und außerhalb des linksseitigen Kupplungsteils (51, 31L, 32L, 41L) und rechtsseitigen Kupplungsteils (52, 31R, 32R, 41R) in Richtung der Fahrzeugbreite angeordnet sind.

10. Motorrad nach zumindest einem der vorhergehenden Ansprüche 1 bis 9, wobei die Windschutzscheibe (15) einen Scheibenkörper (16), hergestellt aus transparentem Kunstharzmaterial, enthält und einen Scheibenrahmen (17) zum Tragen des vorderen Endes des Scheibenkörpers (16), wobei sich der Scheibenrahmen (17) von einem Ende des Scheibenkörpers (16) zu dem anderen Ende in Richtung der Fahrzeugbreite erstreckt und wobei das linksseitige Kupplungsteil (51, 31L, 32L, 41L) und das rechtsseitige Kupplungsteil (52, 31R, 32R, 41R) mit den Enden des Scheibenrahmens (17) in Richtung der Fahrzeugbreite verbunden sind.

11. Motorrad nach zumindest einem der vorhergehenden Ansprüche 1 bis 10, wobei die zweite Trageinrichtung (22) die Windschutzscheibe (15) hinter einer Tragposition der Windschutzscheibe (15) durch die ersten Trageinrichtung (21) trägt.

## Revendications

1. Motocyclette, comprenant un moyen de réglage de position de pare-brise, ayant :
un pare-brise (15) ;
un premier moyen de support (21) définissant un premier chemin de déplacement s'étendant pour être incliné vers l'arrière et vers le haut, ledit premier moyen de support (21) supportant de manière pivotante le pare-brise (15) et pouvant déplacer le pare-brise (15) le long du premier chemin de déplacement ;
le premier moyen de support (21) comporte un couple de pièces de support de gauche et de droite (21L, 21R) situées dans le sens de la largeur du véhicule, dans lequel les deux pièces de support de gauche et de droite (21L, 21R) du premier moyen de support 21 comportent chacune un rail de guidage (23) et un coulisseau (24) supporté sur le rail de guidage (23) pour être mobile et relié de manière pivotante au pare-brise (15), et dans lequel les deux coulisseaux de gauche et de droite (24) sont reliés l'un à l'autre par l'intermédiaire d'un élément d'accouplement (27) ;
un second moyen de support (22) définissant un second chemin de déplacement avec un angle d'inclinaison par rapport à l'horizontale plus grand que celui du premier chemin de déplacement, ledit second moyen de support (22) supportant le pare-brise (15) à une position espacée d'une position où le premier moyen de support (21) supporte le pare-brise (15) et pour déplacer le pare-brise (15) le long du second chemin de déplacement ;
le second moyen de support (22) comporte un couple de pièces de support de gauche et de droite (22L, 22R) situées dans le sens de la largeur du véhicule, dans lequel les deux pièces de support de gauche et de droite (22L, 22R) du second moyen de support 22 comportent chacune un rail de guidage (25) et un coulisseau (26) supporté sur le rail de guidage (25) pour être mobile, dans lequel le premier moyen de support (21) est disposé entre le couple de pièces de support de gauche et de droite (22L, 22R) du second moyen de support (22) dans le sens de la largeur du véhicule ;
le premier moyen de support (21) et le second moyen de support (22) sont disposés côte à côte dans le sens de la largeur du véhicule ;
les coulisseaux (24, 26) du premier et du second moyen de support (21, 22) sont reliés l'un à l'autre sur le côté gauche de la carrosserie de véhicule par un élément d'accouplement de côté gauche (51, 31L, 32L, 41L) s'étendant vers le bas à partir de l'extrémité gauche du pare-brise (15) ;
les coulisseaux (24, 26) du premier et du second moyen de support (21, 22) sont reliés l'un à l'autre sur le côté droit de la carrosserie de véhicule par un élément d'accouplement de côté droit (52, 31R, 32R, 41R) s'étendant vers le bas à partir de l'extrémité droite du pare-brise (15) ; et
l'élément d'accouplement de côté gauche (51, 31L, 32L, 41L) et l'élément d'accouplement de côté droit (52, 31R, 32R, 41R) sont définis chacun par un premier bras (31L, 31R) reliant le coulisseau (24) du premier moyen de support (21) et le pare-brise (15), un second bras (41L, 41R) reliant le coulisseau (26) du second moyen de support (22) et le pare-brise (15) ;
l'élément d'accouplement de côté gauche (51, 31L, 32L, 41L) et l'élément d'accouplement de côté droit (52, 31R, 32R, 41R) comprennent en outre chacun une liaison d'accouplement (32L, 32R) reliant le coulisseau (24) du premier moyen de support (21) et le coulisseau (26) du second moyen de support (22).

2. Motocyclette selon la revendication 1, dans laquelle elle comprend en outre un dispositif d'actionnement (29) pour actionner le pare-brise, et un élément mobile (24) du premier moyen de support (21) relié au dispositif d'actionnement (29) pour se déplacer en même temps que le pare-brise (15).

3. Motocyclette selon la revendication 2, dans laquelle le dispositif d'actionnement (29) est disposé dans une partie globalement centrale dans le sens de la largeur du véhicule.

4. Motocyclette selon la revendication 2 ou 3, dans laquelle le dispositif d'actionnement (29) est disposé entre le couple de pièces de support de gauche et de droite (21L, 21R) du premier moyen de support (21).

5. Motocyclette selon au moins une des revendications précédentes 1 à 4, dans laquelle un dispositif d'actionnement (29) est relié à l'élément d'accouplement (27) entre le couple de pièces de support (21L, 21R) situées dans le sens de la largeur du véhicule du premier moyen de support (21).

6. Motocyclette selon au moins une des revendications précédentes 1 à 5, dans laquelle les rails de guidage (23) du premier moyen de support sont formés en une section transversale en forme de U qui est ouverte vers le haut et sont disposés au-dessous de l'élément d'accouplement (27).

7. Motocyclette selon au moins une des revendications précédentes 1 à 6, dans laquelle l'élément d'accouplement (27) présente une forme semblable à une plaque s'étendant dans le sens de la largeur du véhicule et est incliné parallèlement à la direction dans laquelle les rails de guidage (23) du premier moyen de support (21) s'étendent pour être inclinés, lorsque l'on regarde dans une direction transversale.

8. Motocyclette selon au moins une des revendications précédentes 1 à 7, dans laquelle les rails de guidage (23) du premier moyen de support (21) et les rails de guidage (25) du second moyen de support (22) sont disposés dans une relation de chevauchement mutuel lorsque l'on regarde dans une direction transversale.

9. Motocyclette selon au moins une des revendications précédentes 1 à 8, dans laquelle les rails de guidage (25) du second moyen de support (22) sont formés en sections transversales en forme de U qui sont ouvertes vers l'intérieur dans le sens de la largeur du véhicule et sont disposés à l'extérieur de l'élément d'accouplement de côté gauche (51, 31L, 32L, 41L) et de l'élément d'accouplement de côté droit (52, 31R, 32R, 41R) dans le sens de la largeur du véhicule.

10. Motocyclette selon au moins une des revendications précédentes 1 à 9, dans laquelle le pare-brise (15) comporte un corps formant écran (16) fait d'une matière de résine transparente, et un encadrement d'écran (17) pour supporter l'extrémité avant du corps formant écran (16), dans lequel l'encadrement d'écran (17) s'étend à partir d'une extrémité du corps formant écran (16) à l'autre extrémité dans le sens de la largeur du véhicule, et dans lequel l'élément d'accouplement de côté gauche (51, 31L, 32L, 41L) et l'élément d'accouplement de côté droit (52, 31R, 32R, 41R) sont reliés aux extrémités de l'encadrement d'écran (17) dans le sens de la largeur du véhicule.

11. Motocyclette selon au moins une des revendications précédentes 1 à 10, dans laquelle le second moyen de support (22) supporte le pare-brise (15) en arrière d'une position de support du pare-brise (15) par le premier moyen de support (21).
